# EUROPÄISCHE PATENTANMELDUNG

(11) **EP 0 844 119 A2**
(43) Veröffentlichungstag der Anmeldung: **27.05.1998**
(21) Anmeldenummer: 97118310.8
(22) Anmeldetag: 22.10.1997
(51) Int. Cl.: B60J 1/20

(54) **Wohnmobil, Motorhome od.dgl.**

(30) Priorität: 22.11.1996 DE 29620321 U
(71) Anmelder: Knaus Caravan GmbH, 94118 Jandelsbrunn (DE)
(72) Erfinder: Cürten, Franz J., 89079 Ulm (DE); Nusser, Alois, 94118 Jandelsbrunn (DE)
(74) Vertreter: Matschkur, Lindner Blaumeier Patent- und Rechtsanwälte

(57) **Zusammenfassung**

Wohnmobil, Motorhome od.dgl., wobei im Armaturenbrett (1) ein Schacht (2) für einen nach oben herausziehbaren und in Auszugsstellung feststellbaren, in Abstand von der Windschutzscheibe verlaufenden Roll- oder Faltrollo (3) vorgesehen ist.

## Beschreibung

Bei Wohnmobilen ergibt sich in stärkerem Maß als bei Wohnwagen das Problem einer Sichtabschottung des Innenraums des parkenden, auf einem Campingplatz od.dgl. abgestellten Fahrzeugs. Während bei Wohnwagen die Fenster durch Vorhänge verhängt werden können, ist dies bei Wohnmobilen zumindest im Bereich der Windschutzscheibe des Fahrzeugs natürlich nicht möglich, da solche Vorhänge, auch wenn man sie zur Seite wegzieht, die Sicht des Fahrers unzulässig beeinträchtigen würden.

Um dennoch einen ausreichenden Sichtschutz erzielen zu können, ist erfindungsgemäß vorgesehen, daß im Armaturenbrett ein Schacht für einen nach oben herausziehbaren und in Auszugsstellung feststellbaren, in Abstand von der Windschutzscheibe verlaufenden Roll- oder Faltrollo vorgesehen ist, wobei der Faltrollo bevorzugt in unterschiedlichen Auszugsstellungen feststellbar ist. Diese Feststellbarkeit in unterschiedlichen Auszugsstellungen läßt sich am einfachsten mit einer bekannten Konstruktion solcher Faltrollos erreichen, bei denen die Falten zwischen parallelen Seilzügen geführt sind, die stationär unter dem Dach bzw. unter dem Boden des über der Fahrerkabine angeordneten Bettes neben den Seitenwänden aufgehängt sind.

Die Ausbildung des Faltrollos und des ihn aufnehmenden Schachtes ist dabei bevorzugt so getroffen, daß der Faltrollo in der eingefahreren Nichtgebrauchsstellung flächenbündig im Armaturenbrett versenkt ist, wobei in Weiterbildung der Erfindung im Armaturenbrett neben dem Schacht für den Faltrollo wenigstens eine Griffmulde zum Ergreifen der Deckschiene des Faltrollos und zum Herausziehen des Faltrollos angeformt sein kann.

Ein derartiger Faltrollo bietet nicht nur einen hervorragenden Sichtschutz, der durch entsprechend weites Hochziehen auf den notwendigen, von außen einsehbaren Bereich beschränkt sein kann, ohne gleich die gesamte Windschutzscheibe abzudecken und damit die Sicht aus der Windschutzscheibe zu blockieren, sondern dieser Faltrollo bietet auch eine hervorragende thermische Abschirmung, die verhindert, daß in der kalten Jahreszeit Kaltluft von der großflächigen Windschutzscheibe in den Wohn- und Schlafbereich des Wohnmobils gelangt.

Zur noch besseren thermischen Abschirmung und zur Verbesserung des Wohnklimas im Wohnmobil kann dabei in Weiterbildung der Erfindung vorgesehen sein, daß unter dem Armaturenbrett zwischen dem Faltrollo und der Windschutzscheibe ein Warmwasser- oder Warmluftkonvektor angeordnet ist, über dem das Armaturenbrett mit Warmluftaustrittsöffnungen versehen ist. Beispielsweise kann das Armaturenbrett über dem Warmwasserkonvektor als Lochblechstreifen ausgebildet sein.

Durch diesen Warmwasserkonvektor ergibt sich zwischen dem nach oben gezogenen Faltrollo und der Windschutzscheibe eine Warmluftkaskade, die von vorneherein ein zu starkes Abkühlen der Windschutzscheibe und insbesondere ein Durchschlagen von sich dort bildender Kaltluft in den Innenraum sicher verhindert. Darüber hinaus bildet die Warmluftkaskade auch von unten her eine gezielte Beheizung des im Bugbereich über der Fahrerkabine angeordneten Schlafbereichs und trägt somit erheblich zur Verbesserung der Beheizung gerade dieses etwas isolierten und abgegrenzten Bereichs bei.

Weitere Vorteile, Merkmale und Einzelheiten der Erfindung ergeben sich aus der nachfolgenden Beschreibung eines Ausführungsbeispiels sowie anhand der Zeichnung. Dabei zeigen:

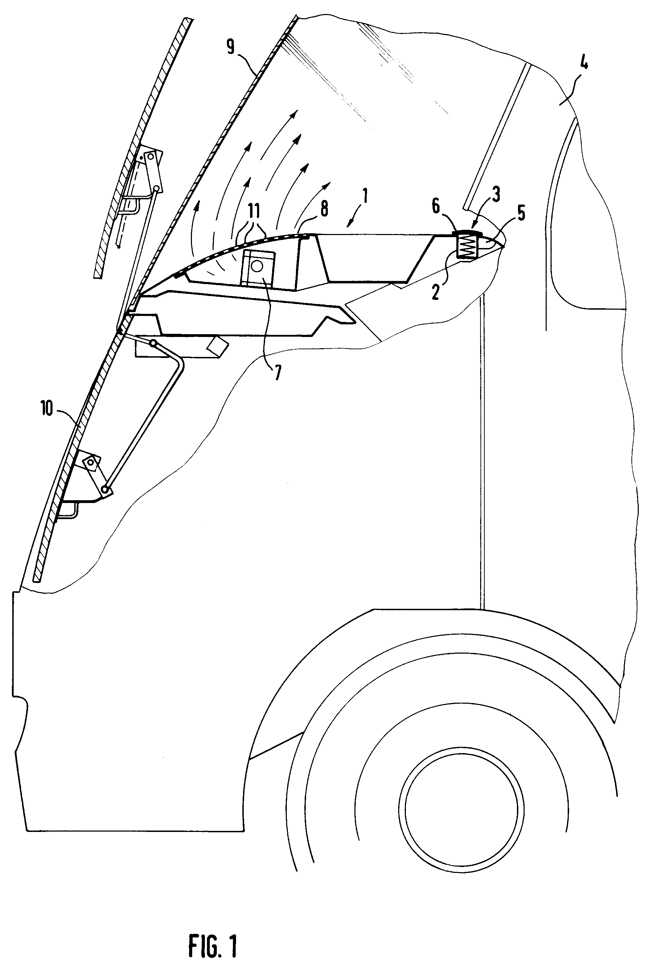

- Fig. 1: eine teilweise aufgebrochene Seitenansicht des Frontbereichs eines erfindungsgemäß ausgestatteten Wohnmobils,
- Fig. 2: eine perspektivische Teilansicht des Frontbereichs mit dem Armaturenbrett von innen bei versenktem Faltrollo, und
- Fig. 3: eine der Fig. 2 entsprechende Ansicht bei nach oben herausgezogenem Faltrollo.

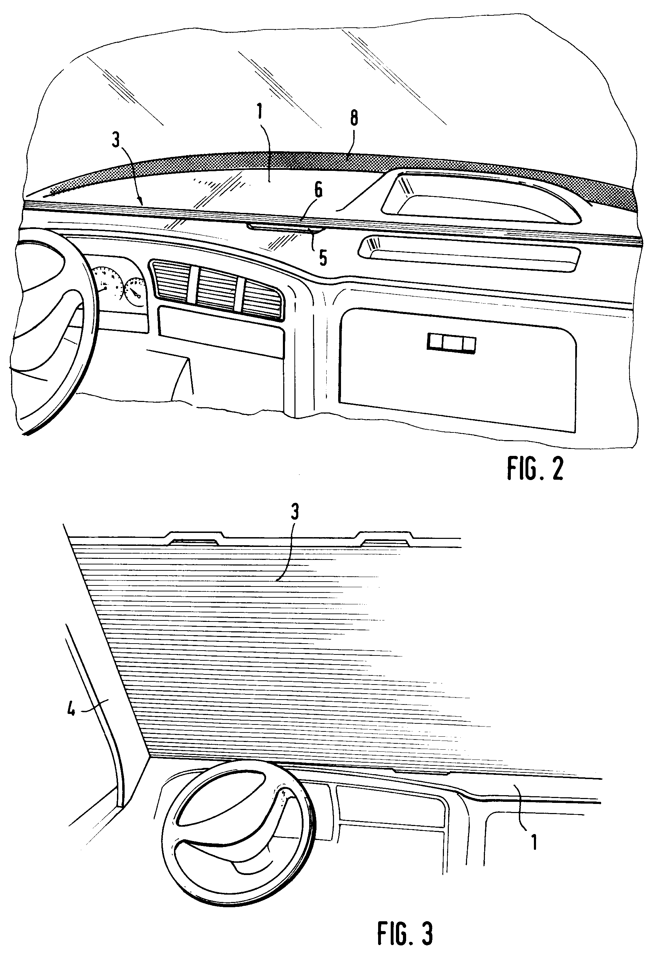

Im Armaturenbrett 1 des in den Figuren gezeigten Wohnmobils ist ein Schacht 2 eingebracht, der zur flächenbündig versenkten Aufnahme eines Faltrollos 3 dient. Der Faltrollo, der beispielsweise an nicht gezeigten, seitlich im Bereich der Türholme 4 angeordneten, die Faltungsstreifen vorne und hinten einfassenden Seilzügen geführt sein kann, die bis zur Fahrzeugdecke, resp. dem Boden des über dem Fahrersitz angeordneten Schlafbereichs reichen, läßt sich in unterschiedlichen Auszugsstellungen arretieren und bieten bei vollständigem Herausziehen, wie es in Fig. 3 gezeigt ist, einen guten Sichtschutz, der ein Einsehen des Wohnraums des Wohnmobils von außen verhindert. Gleichzeitig bietet der Faltrollo eine gute thermische Isolierung des Innenraums gegenüber der Windschutzgscheibe, so daß nicht im Winter Kaltluft, die sich an der Windschutzscheibe bildet, ungehindert in den Wohnraum einströmen kann. Bei 5 erkennt man eine neben dem Schacht 2 angeordnete Griffmulde zum Ergreifen der Deckschiene 6 des Faltrollos und zum Erleichtern seines Herausziehens nach oben. Unter dem Armaturenbrett 1 ist vorzugsweise quer über die gesamte Fahrzeugbreite verlaufend ein Warmwasserkonvektor 7 unterhalb eines Lochblechstreifens 8 im Armaturenbrett 1 angeordnet, durch die sich bei nach oben herausgezogenem Faltrollo 3 eine Warmluftkaskade zwischen dem Faltrollo 3 und der Windschutzscheibe ausbildet.

Bei 10 erkennt man die Motorraumabdeckung, die sowohl in der Schließstellung als auch in der Öffnungsstellung gezeigt ist, und die bündig und mit gleicher Wölbung wie die Windschutzscheibe 9 verläuft.

Statt des Warmwasserkonvektors 7 könnte auch ein Warmluftkonvektor, beispielsweise in Form eines Warmluft führenden perforierten Rohrs, oder eine sonstige z.B. elektrische Heizung vorgesehen werden.

## Patentansprüche

1. Wohnmobil, Motorhome od.dgl., dadurch gekennzeichnet, daß im Armaturenbrett (1) ein Schacht (2) für einen nach oben herausziehbaren und in Auszugsstellung feststellbaren, in Abstand von der Windschutzscheibe (9) verlaufenden Roll- oder Faltrollo (3) vorgesehen ist.

2. Wohnmobil nach Anspruch 1, dadurch gekennzeichnet, daß der Faltrollo (3) in unterschiedlichen Auszugsstellungen feststellbar ist.

3. Wohnmobil nach Anspruch 1 oder 2, dadurch gekennzeichnet, daß der Faltrollo (3) in der eingefahrenen Nichtgebrauchsstellung flächenbündig im Armaturenbrett (1) versenkt ist.

4. Wohnmobil nach Anspruch 3, dadurch gekennzeichnet, daß im Aramturenbrett (1) neben dem Schacht (2) für den Faltrollo (3) wenigstens eine Griffmulde (5) zum Ergreifen der Deckschiene (6) eingeformt ist.

5. Wohnmobil nach einem der Ansprüche 1 bis 4, gekennzeichnet durch einen unter dem Armaturenbrett (1) zwischen Faltrollo (3) und Windschutzscheibe (9) unter Warmluftaustrittsöffnungen (11) angeordneten Warmwasser- oder Warmluftkonvektor (7).

6. Wohnmobil nach Anspruch 5, dadurch gekennzeichnet, daß das Armaturenbrett (1) über dem Warmwasser- oder Warmluftkonvektor (7) als Lochblechstreifen (8) ausgebildet ist.
